# EUROPÄISCHE PATENTSCHRIFT

(11) **EP 2 352 693 B1**
(45) Veröffentlichungstag und Bekanntmachung des Hinweises auf die Patenterteilung: **02.03.2016**
(21) Anmeldenummer: 09776480.7
(22) Anmeldetag: 26.03.2009
(51) Int. Cl.: B67C 3/24, B65G 47/86, B65G 47/90

(54) **KLAMMER ZUM ERGREIFEN VON FLASCHENHÄLSEN, INSBESONDERE VON PET-FLASCHEN**
CLIP FOR CAPTURING BOTTLE NECKS, PARTICULARLY OF PET BOTTLES
PINCE DE PRÉHENSION DE GOULOTS DE BOUTEILLES, EN PARTICULIER DE BOUTEILLES EN PET

(30) Priorität: 03.11.2008 DE 102008055617
(43) Veröffentlichungstag der Anmeldung: 10.08.2011
(73) Patentinhaber: KHS GmbH, 44143 Dortmund (DE)
(72) Erfinder: FAHLDIECK, Andreas, 55743 Idar-Oberstein (DE)
(86) Internationale Anmeldenummer: PCT/EP2009/002208
(87) Internationale Veröffentlichungsnummer: WO 2010/060487

(56) Entgegenhaltungen:
- EP-A1- 1 375 395
- DE-A1-102006 012 020
- JP-A- 2 190 229
- US-B1- 6 386 609

## Beschreibung

Die Erfindung richtet sich auf eine Klammer zum Ergreifen von Flaschenhälsen, insbesondere von PET-Flaschen, Zur Anwerdung in Flaschenabfüllanlagen, wobei die Klammerarme in der horizontalen Ebene verschwenkbar sind, gemäß den Oberbegriff des Anspruchs 1 und wie aus der DE 10 2006 012 020 A bekannt.

Derartige Klammern gibt es in sehr unterschiedlichen Ausgestaltungen. So zeigt beispielsweise die DE 10 2006 012 020 A ein Klammerpaar, wobei die beiden Klammerarme in ungetrennte Achsen schwenkbar sind und die Schließkraft mittels einer Feder in Schließstellung gehalten wird. Da derartige Federelemente häufig den an Flaschenabfüllanlagen geforderten Forderungen der Hygiene nicht gerecht werden, ist man bemüht, andere Schließmechanismen vorzuschlagen. So sieht in einer aufwendigen Gestaltung die DE 102005 041 929 Dauermagnete vor, die in unterschiedlichen Paarungen sowohl das Schließen als auch das Öffnen unterstützen. In dieser Lösung sind die Dauermagneten außerhalb der Klammergreifarme positioniert.

Zur Unterstützung der Öffnungskraft der Klammern sieht eine Lösung nach der DE 20 2005 002 924 U oder der DE 10 2005 014 838 A vor, dass zwischen Greifbereich der Klammern und Schwenkachsen sich abstoßende Magneten positioniert sind.

Die Aufgabe der vorliegenden Erfindung besteht darin, durch eine einfache Konstruktion möglichst gleichmäßige Haltekräfte bei Flaschenhälsen durch unterschiedliche Durchmesser zu erzielen.

Mit einer Klammer nach Anspruch 1 wird diese Aufgabe gemäß der Erfindung gelöst.

Je nach Positionierung der Dauermagnete in den Klammerarmen reicht diese Schließkraft für eine Wandbreite von Flaschenhalsdurchmessern auf, allerdings kann bei größeren Flaschenhälsen diese Haltekraft nicht mehr ausreichen.

Hierzu sieht die Erfindung vor, dass zwischen der Permanentmagnetaufnahme und der Schwenkachse die Klammerarme mit einem das elastische Aufweiten und Rückfedern ermöglichenden Klammerbügel ausgerüstet sind.

Zweckmäßig sind die Permanentmagnete im Kunststoff der Klammerarme eingelassen, insbesondere eingegossen, wie dies die Erfindung ebenfalls vorsieht. Durch diese Ausgestaltung wird erreicht, dass die Klammer insbesondere aus einem ein leichtes Reinigen ermöglichenden Kunststoff gebildet sein kann, und den Ansprüchen an die Reinigungsfähigkeit dieser Elemente einschließlich der erfindungsgemäßen Klammer als Universalclip gerecht wird.

In weitererAusgestaltung ist nach der Erfindung vorgesehen, dass der Greifbereich der Klammer, die Permanentmagnetaufnahmen, die Klammerarme mit den Klammerbügeln und das Schwenkachsenlager der Klammer als einstückiges Kunststoffelement ausgebildet sind.

Durch die Einstückigkeit der gesamten Klammer wird ein sehr einfacher funktionsfähiger Clip bereitgestellt, der einfach herzustellen und insbesondere auch leicht auszuwechseln ist, falls Schäden an der Klammer auftreten sollten.

Eine weitere Ausgestaltung der Erfindung besteht darin, dass dass die Permanentmagnete in den Klammerarmen in einem austauschbaren Wechselrahmen befestigt sind. Diese Auswechselbarkeit kann beispielsweise dann sinnnvoll sein, wenn etwa stärke Magneten oder zerstörte Magneten eingebaut werden sollen.

Zur Erhöhung der magnetischen Haltekraft kann die Erfindung nach einem weiteren Ausführungsbeispiel auch vorsehen, dass die Klammerarme getrennt drehbar gelagert sind und in ihrem Drehachsenbereich einen wenigstens mit Permanentmagneten bestückten Ansatz aufweisen, wobei am Klammerhalteblock eine abstoßende Kraft ausübende Permanentmagneten vorgesehen sind.

Die Erfindung ist nachstehend anhand der Zeichnung beispielsweise näher erläutert. Diese zeigt in
- Fig. 1: eine Klammer mit Halterung und Aufsicht, teilweise geschnitten gemäß Linie A-A,
- Fig. 2: eine Seitenansicht der Klammer,
- Fig. 3: eine räumliche Seitenansicht der Klammer nach den Fig. 1 und 2,
- Fig. 4: die erfindungsgemäße Klammer ohne weitere Bauteile in Spreizstellung für große Flaschen durch Flaschenhalsdurchmesser,
- Fig. 5: eine der Fig. 1 im Wesentlichen entsprechende Darstellung der Klammer mit einem teilweise gespreizten Klammerarm sowie in
- Fig. 6: ein abgewandeltes Ausführungsbeispiel der Klammer.
- Fig. 7: eine vergrößerte räumliche Darstellung einer abgewandelten Ausführungsform der erfindungsgemäßen Klammern sowie in
- Fig. 8: einen Teilschnitt etwa gemäß Linie VIII-VIII in Fig. 7.

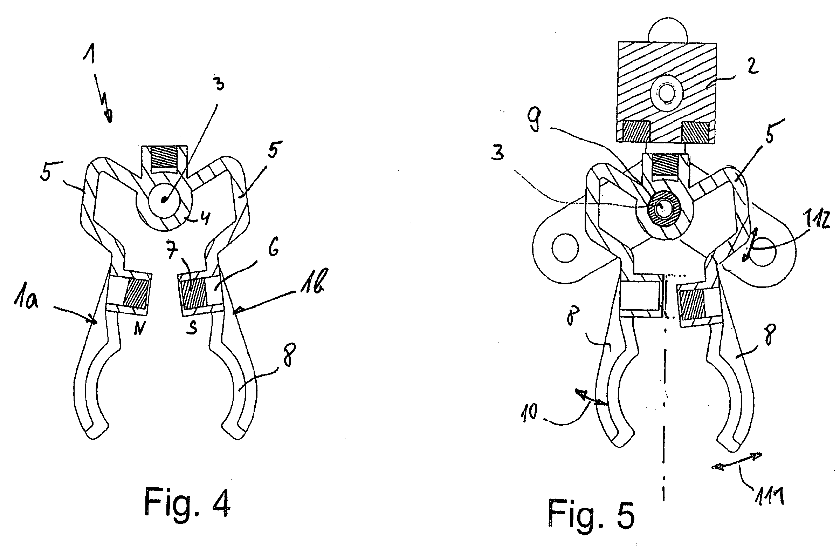

Die allgemein mit 1 bezeichnete Klammer ist an einem Klammerhalteblock 2 um eine Achse 3 drehend leichtyerschwenk-bar gelagert und einstückig aus Kunststoff gefertigt. Der Klammeraufbau ist dabei, wie beispielsweise aus Fig. 4 hervorgeht, der folgende:
Die Klammer 1 weist zwei Klammerarme 1 a und 1 b auf. Dabei verlaufen von einem die Achse bildenden, die Schwenkachse 3 umgebenden ringförmigen Bereich in Hülsenform, in Fig. 4 mit 4 bezeichnet, spiegelsymmetrisch zwei in Aussicht etwa rautenförmige Klammerbügelbereiche 5, die in Aufnahmen 6 übergehen, in denen Permanentmagnete 7 eingegossen sind, die gegenpolig angeordnet sind, derart, dass eine Schließkraft der Klammer aufgebracht wird. An diesen Aufnahmen 6 für die Permanentmagneten sind die mit 8 bezeichneten Greifbereiche bzw. Greifbügel der Klammer 1 angeformt.

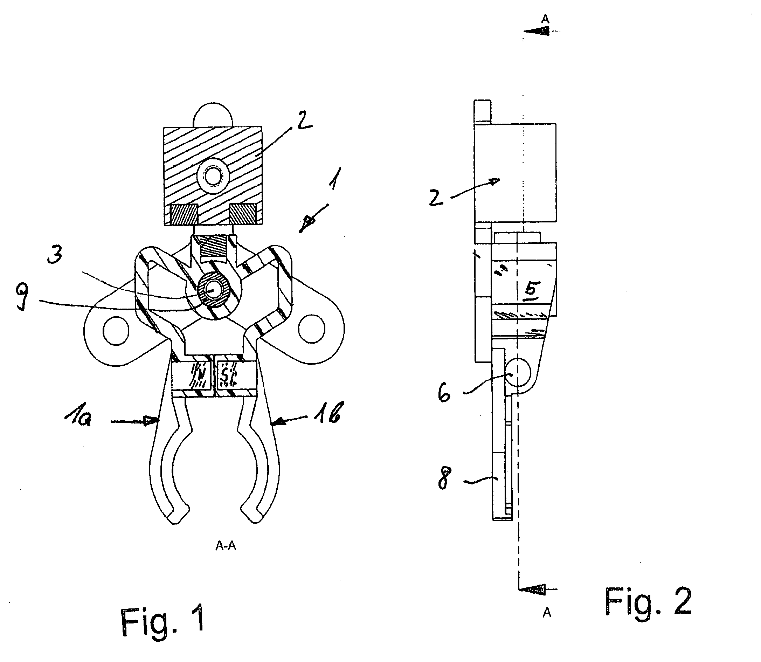

In Fig. 1 und 5 ist noch angedeutet, dass die Klammer 1 mittels z.B. einer Gleithülse 9 am Klammerhalteblock 2 geringfügig verschwenkbar positioniert ist. Sie kann über diese Gleithülse 9 einfach aufgesteckt und abgezogen werden.

In Fig. 5 ist angedeutet, dass bei Ergreifen von Flaschenhälsen kleineren Durchmessers die Klammerbügel 8 geringfügig geöffnet und geschlossen werden können, wobei die Schließkraft über die Dauermagneten 7 aufgebracht sind, dieser kleinere Öffnungsbereich ist mit dem Doppelpfeil 10 ange- deutet.

Werden Flaschen größeren Durchmessers ergriffen, können die Klammerarme mit den Klammerbügeln 8 weiter aufgeweitet werden, was mit dem Doppelpfeil 111 in Fig. 5, rechte Figurenhälfte, angedeutet ist. Dabei wird die Rückstellkraft über die Verformbarkeit der Klammerbügel 5 bewirkt. Dies ist in Fig. 5, rechte Figurenhälfte, mit einem kleinen Doppelpfeil 112 angegeben.

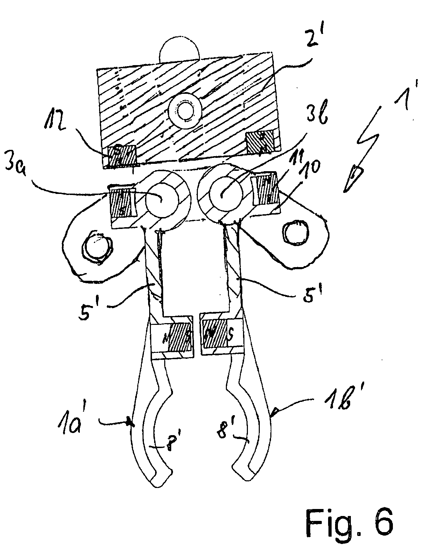

In Fig. 6 ist ein abgewandeltes Auführungsbeispiel der Erfindung dargestellt, wobei die funktionell gleichen Teile bei der Ausführungsform der vorangegangenen Figuren hier mit gleichen Bezugszeichen versehen sind, ergänzt durch ein.

Im Unterschied zu den vorangegangenen Ausführungsformen sind hier die beiden Klammerarme 1 a' und 1b' um Drehachsen 3a und 3b verschwenkbar. Diese Schwenkbereiche weisen Ansätze 10 auf, in denen Permanentmagneten 11 eingebettet sind, die mit Permanentmagneten 12 korrespondieren, die im mit 2' bezeichneten Klammerhalteblock so eingebettet sind, dass jeweils die Polung zu den Permanentmagneten 11 abstoßend gleich ist. Dadurch wird eine zusätzliche Schließkraft auf die Greifbereiche 8' ausgeübt.

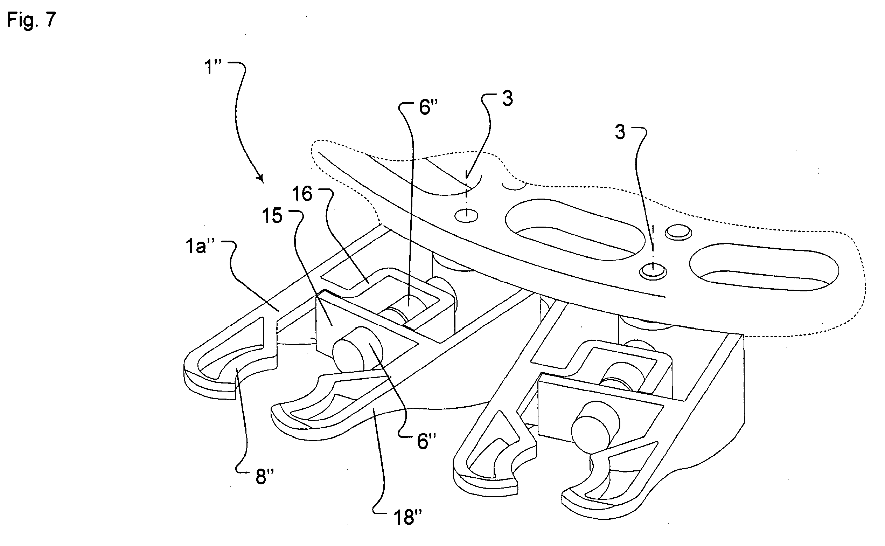

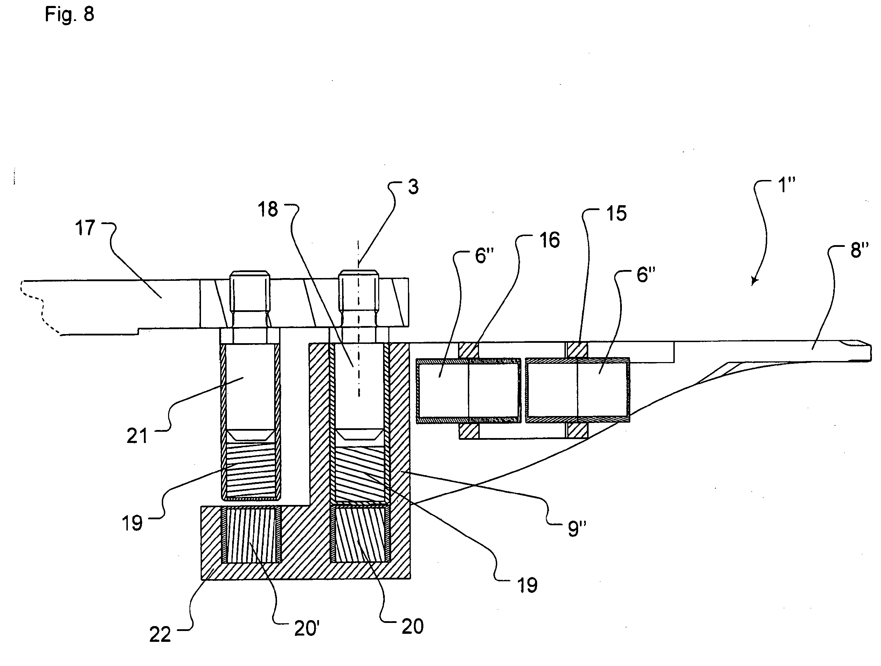

In den Fig. 7 und 8 ist ein weiteres abgewandeltes Ausführungsbeispiel der Erfindung dargestellt, wobei auch hier die funktional gleichen Elemente mit den gleichen Bezugszeichen versehen sind, wie bei der Beschreibung der vorangegangenen Ausführungsformen, zum Teil mit" versehen.

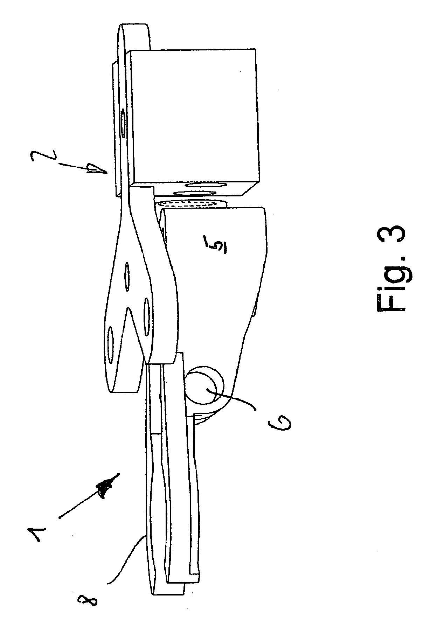

Ein wesentlicher Unterschied der Gestaltung nach den Fig. 7 und 8 besteht darin, dass die Klammerarme 1a" bzw. 1b" der Klammer, algemein mit 1" bezeichnet, je mit nach innen weisenden Tragarmen 15 bzw. 16 ausgerüstet sind, die die zur Zentrierung bzw. Rückst lung der Klammerarme dienenden Permanentmagneten 6" tragen. Im dargestellten Beispiel der Fig. 7 ist der Tragarm 15 als gerader, nach innen weisender Steg ausgebildet, während der Tragarm 16 doppel-L-förmig abgekröpft ist und die Einleitung der Rückstellkraft in den jeweiligen Klammerarm 1 a und 1 b in etwa oder genau an der geometrisch gleichen Stelle zu bewirken, wie bei dem jeweils anderen Arm.
Dies ermöglicht im Gegensatz zu den Fig. 1-6 gezeigten Ausführungsvarianten eine andere Anordnung der Permanentmagnete 6". Anstelle von in Drehrichtung liegenden Magneten liegen diese radial ausgerichtet also quer zur Drehrichtung ausgerichtet. Dies hat den Vorteil, dass die gegenseitige Beeinflussung der nebeneinander angeordneten Klammern oder Klipps durch magnetisch, abstoßende Wirkung gleicher Magnetorientierung (Süd-Süd, Nord-Nord) der jeweils benachbarten Klammern oder Klipps dieschnelle und effektive Zentrierung der Klammern oder Klipps unterstützt.

In Fig. 8 ist noch im Schnitt dargestellt, wie die jeweilge Klammer 1" an einem Maschinenelement, z.B. an einem allgemein mit 17 bezeichneten Stern fixiert ist. Erkennbar ist jede Klammer 1" an ihren von den Greifbereichen 8" abgewandten Ende mit einer Gleithülse 9" ausgestattet zum Übergreifen eines in die Gleithülse von oben eingreifenden Drehbolzen 18, der an seinem unteren Ende mit einem magnetisierbaren bzw. magnetischen Bereich, allgemein mit 19 bezeichnet, ausgerüstet ist, während die Gleithülse 9 mit eher Sackbohrung ausgestattet ist, die ihrerseits im Bohrungsgrund mit einem magnetisierbaren bzw. magnetischen Element 20 derart ausgerüstet ist, dass sich diese beiden Bereiche zwischen Hülse und Drehbolzen derart anziehen, dass die Klammer 1" dort in der Höhe fixiert ist.

Zur Zentrierung und Rückstellung der Klammer 1" ist am Stern 17 ein zweiter Bolzen 21 ebenfalls mit einem magnetischen bzw. magnetisierbaren Ende 19 vorgesehen, wobei an der Gleithülse 9" ein Ansatz 22 angeformt ist, der wiederum einen Magnet bzw. einen magnetisierbaren Bereich 20 tragt, wobei sich diese beiden Bereiche in der Montagelage derart anziehen, dass die Klammer 1" jeweils wieder in ihre gewünschte Position zurückgestellt wird.

Eine weitere mögliche Ausführung besteht darin, die Klammer 1" bezüglich der Rotation um die Drehachse 3 seitlich fixiert zu befestigen, indem anstelle des magnetischen Bolzen 21 ein verlängerter unmagnetischer Bolzen direkt in den Ansatz 22 einfährt. Bei dieser Ausführung entfällt dann der Magnet 20 im Ansatz 22, so dass der verlängerte unmagnetische Bolzen formschlüssig im Ansatz 22 zu sitzen kommt.

Darüber hinaus ist eine dritte Variante vorgesehen, bei welcher die Klammer 1" statt der zwei Sackbohrungen Durchgangsbohrungen erhält, wodurch eine formschlüssige Befestigung und Fixierung in der Höhe durch die Klammer hindurch durch Schrauben oder Fedespangen etc. ermöglicht wird.

Durch diese mechanisch höherwertige Fixierung in der Höhe, wird das Halten von gefüllten Flaschen ermöglicht, was zum Beispiel für einen Einsatz der vorgenannten Kammern und Klipps an einem Füller bedeutsam ist.

Natürlich ist das beschriebene Ausführungsbeispiel der Erfindung noch in vielfacher Hinsicht abzuändern. So ist die Erfindung insbeson dere nicht auf die geometrische Gestaltung der Klammerbügel der jeweiligen Klammer beschränkt, auch nicht auf die wiedergegebene topfförmige Aufnahme der Dauermagneten und dgl. mehr.

## Patentansprüche

1. Klammer (1) zum Ergreifen von Flaschenhälsen, insbesondere von PET-Flaschen, zur Anwerdung in Flaschenabfüllanlagen, wobei die Klammerarme in der horizontalen Ebene verschwenkbar sind, wobei an einem Klammerarm (1a, 1b) zwischen einem Greifbereich (8) und einer Schwenkachse (3) ein Permanentmagnet (7) angeordnet ist und an dem andern, gegenüberliegenden Klammerarm (1a, 1 b) ein weiteres Permanentmagnet oder ein magnetisierbares Metall angeordnet ist, die in der Gebrauchslage eine die Klammer (1) schließende Kraft aufeinander ausüben, **dadurch gekennzeichnet, dass** zwischen dem Greifbereich (8) und der Schwenkachse (3) Aufnahmen (6) für Permanentmagnete (7) aufweisen, die In der Gebrauchslage eine die Klammer (1) schließende Kraft aufeinander ausuben, und dass zwischen der Permanentmagnetaufnahme (6) und der Schwenkachse (3) die Klammerarme (1a bis 1b) mit einem das elastische Aufweiten und Rückfedern ermöglichenden Klammerbügel (5) ausgerüstet sind, wobei der Greifbereich (8) der Klammer (1), die Permanentmagnetaufnahmen (6), die Klammerarme (1a,1b) mit den Klammerbügeln (5) und ein Schwenkachsenlager (4) der Klammer (1) als einstückiges Kunststoffelement ausgebildet sind.

2. Klammer nach Anspruch 1, **dadurch gekennzeichnet, dass** beide Klammerarme (1a,1b) aus Kunststoff gefertigt sind.

3. Klammer nach Anspruch 1 oder 2, **dadurch gekennzeichnet, dass** die Permanentmagnete (7) in den Klammerarmen (1a, 1b) eingelassen, insbesondere eingegossen sind.

4. Klammer nach einem der Ansprüche 1 bis 3 **dadurch gekennzeichnet, dass** die Klammerarme (1a',1b') getrennt drehbar gelagert sind und in ihrem Drehachsenberelch einen wenigstens mit Permanentmagneten (11) bestückten Ansatz (10) aufweisen, wobei an einem Klammerhalteblock (2) einer die Klammer haltenden Transportvorrichtung (17) eine abstoßende Kraft ausübende Permanentmagneten (12) vorgesehen sind.

5. Klammer nach einem der Ansprüche 1 bis 4, **dadurch gekennzeichnet, dass** die Permanentmagnete (7) in den Klammerarmen (1a,1b) in einem austauschbaren Wechselrahmen befestigt sind.

6. Transportvorrichtung, wobei die linear oder rotatorisch antreibbaren Transportvorrichtung an ihrem äußeren Rand eine Vielzahl von Klammern umfasst, **dadurch gekennzeichnet, dass** die Klammern gemäß einem der vorstehenden Ansprüche geformt sind.

7. Verfahren zum Transport von Behältern, insbesondere von PET-Flaschen, mit linear oder rotatorisch antreibbaren Transportvorrichtungen, wobei die Transportvorrichtungen an ihrem äußeren Rand eine Vielzahl von Klammern umfassen, **dadurch gekennzeichnet, dass** mindestens eine Transportvorrichtung Klammern gemäß einem der Ansprüche 1 bis 5 aufweist.

## Claims

1. A clip (1) for capturing bottle necks, particularly the bottle necks of PET bottles, for use in bottling plants, the clip including clip arms which are able to pivot in the horizontal plane, the clip comprising a permanent magnet (7) arranged on one clip arm (1a, 1 b) between a gripping area (8) and a pivot axis (3) and a further permanent magnet or a magnetisable metal being arranged on the other opposite clip arm (1 a, 1b), such that when in the operating position they exert a force on one another that closes the clip (1), **characterised in that** between the gripping area (8) and the pivot axis (3), the clip further comprises receptacles (6) for permanent magnets (7) which when in the operating position exert a force on one another that closes the clip (1), and **in that** between the permanent magnet receptacle (6) and the pivot axis (3), the clip arms (1 a to 1 b) are equipped with a clip bar (5) which facilitates elastic expanding and spring-back, and that the gripping area (8), the clip (1), the permanent magnet receptacles (6), the clip arms (1 a,1 b) with clip bars (5) and a pivot axis bearing (4) of the clip (1) are configured as a one-piece plastic element.

2. The clip of claim 1 wherein both clip arms (1 a, 1 b) are produced from plastic.

3. The clip of claim 1 or 2 wherein the permanent magnets (7) are embedded, and in particular cast, into the clip arms (1 a, 1 b).

4. The clip of any one of claims 1 to 3 wherein the clip arms (1a',1b') are separately and pivotably mounted and comprise in the region of their pivot axis a projection (10) populated at least with permanent magnets (11), and with permanent magnets (12) which exert a repulsive force being provided on a clip holding block (2) of a transport device (17) which holds the clip.

5. The clip of any one of claims 1 to 4 wherein the permanent magnets (7) are mounted in the clip arms (1 a,1 b) in an interchangeable frame.

6. A transport device, with the linearly or rotationally drivable transport device comprising a plurality of clips around its outer edge, wherein the clips are formed according to one of the preceding claims.

7. A method for transporting containers, particularly PET bottles, with linearly or rotationally drivable transport devices comprising a plurality of clips around their outer edge, wherein at least one transport device comprises clips according to any one of claims 1 to 5.

## Revendications

1. Pince (1) de préhension de goulots de bouteilles, en particulier de bouteilles en PET, destinée à être utilisée dans des installations de mise en bouteille, sachant que les branches de pince peuvent pivoter dans le plan horizontal, sachant qu'un aimant permanent (7) est disposé au niveau d'une branche de pince (1 a, 1 b) entre une zone de préhension (8) et un axe de pivotement (3) et qu'un autre aimant permanent ou un métal pouvant être magnétisé est disposé au niveau de l'autre branche de pince (1a, 1b) opposée, lesquels exercent l'un sur l'autre, dans la position d'utilisation, une force fermant la pince (1),
**caractérisée en ce que** les deux branches de pince présentent, entre la zone de préhension (8) et l'axe de pivotement (3), des logements (6) pour des aimants permanents (7), qui exercent les uns sur les autres, dans la position d'utilisation, une force fermant la pince (1), et **en ce que** les branches de pince (1a à 1b) sont équipées, entre le logement d'aimant permanent (6) et l'axe de pivotement (3), d'un étrier de pince (5) permettant l'élargissement élastique et le rappel, sachant que la zone de préhension (8) de la pince (1), les logements d'aimant permanent (6), les branches de pince (1a, 1b) comprenant les étriers de pince (5) et un palier d'axe de pivotement (4) de la pince (1) sont réalisés sous la forme d'un élément en matière plastique d'un seul tenant.

2. Pince selon la revendication 1, **caractérisée en ce que** les deux branches de pince (1 a, 1 b) sont fabriquées à partir d'une matière plastique.

3. Pince selon la revendication 1 ou 2, **caractérisée en ce que** les aimants permanents (7) sont insérés, en particulier sont scellés, dans les branches de pince (1a, 1b).

4. Pince selon l'une quelconque des revendications 1 à 3, **caractérisée en ce que** les branches de pince (1a', 1b') sont montées de manière à pouvoir tourner séparément et présentent, dans leur zone d'axe de rotation, un épaulement (10) pourvu au moins d'aimants permanents (11), sachant que sont prévus, au niveau d'un bloc de maintien de pince (2) d'un dispositif de transport (17) maintenant la pince, des aimants permanents (12) exerçant une force de répulsion.

5. Pince selon l'une quelconque des revendications 1 à 4, **caractérisée en ce que** les aimants permanents (7) sont fixés dans les branches de pince (1a, 1b) dans un cadre de changement interchangeable.

6. Dispositif de transport, sachant que le dispositif de transport pouvant être entraîné de manière linéaire ou de manière rotative comprend, au niveau de son bord extérieur, une pluralité de pinces, **caractérisé en ce que** les pinces sont formées selon l'une quelconque des revendications précédentes.

7. Procédé servant au transport de contenants, en particulier de bouteilles en PET, comprenant des dispositifs de transport pouvant être entraînés de manière linéaire ou de manière rotative, sachant que les dispositifs de transport comprennent, au niveau de leur bord extérieur, une pluralité de pinces, **caractérisé en ce qu'**au moins un dispositif de transport présente des pinces selon l'une quelconque des revendications 1 à 5.
